# EUROPEAN PATENT SPECIFICATION

(11) **EP 3 544 404 B1**
(45) Date of publication and mention of the grant of the patent: **18.11.2020**
(21) Application number: 17817257.3
(22) Date of filing: 22.11.2017
(51) Int. Cl.: A01B 13/00, A01B 13/12

(54) **FURROWLESS PLOUGH**
FURCHENLOSER PFLUG
CHARRUE SANS SILLON

(30) Priority: 23.11.2016 NL 2017845
(43) Date of publication of application: 02.10.2019
(73) Proprietor: Steverink, Wilhelmus Johannes Maria, 8309 PH Tollebeek (NL)
(72) Inventor: Steverink, Wilhelmus Johannes Maria, 8309 PH Tollebeek (NL)
(74) Representative: Van Breda, Jacobus
(86) International application number: PCT/NL2017/050763
(87) International publication number: WO 2018/097714

(56) References cited:
- DE-A1- 4 040 802
- US-A- 2 098 552

## Description

The present invention relates to a plough comprising a set of at least two plough shares at least partially arranged behind one another, including a first and a last plough share, and a conveying means extending above the plough shares.

The present invention relates to a method in which, by means of a first plough share, a mass of soil is cut from a furrow which is subsequently filled with soil from a neighbouring plough share.

Such a plough is known from DE 40 40 802. A drawback of the known ploughs resides in that during carrying out successive operating steps it has to be taken into account that after each operating step an open furrow with a mass of cut out soil is produced which has to be filled in the next operating step with soil being cut out in this step. The interdependence of the successive operating steps is the reason why it becomes increasingly difficult to plough in a straight line.

It is an object of the present invention to provide an improved plough, as well as an improved method, capable of ploughing without creating an open furrow after each operating step.

To achieve this, the plough according to the invention is characterized in that said conveying means is arranged to convey the soil cut out by the first plough share upwards and to the furrow cut by the last plough share.

An advantage of the plough according to the invention resides in that said plough not only does not require an initial furrow, but it also does not leave an open furrow after ploughing, making said plough very suitable for use as, in particular, but not exclusively, a so-termed traffic lanes plough. This means that over a number of years, use is made of fixed traffic lanes between which there are cultivation beds which need to be ploughed. The plough according to the invention is particularly suitable for this purpose. In addition, random, not necessarily successive, cultivation beds can be ploughed. This is favourable in the case of so-termed "intercropping", in which crops are grown in not necessarily successive cultivation beds and ploughing is carried out accordingly. In addition, it is easy to plough banks such as ditch banks. A further advantage is that the number of plough shares can be chosen freely, in principle, dependent on the strip of land to be ploughed in each operating step. In practice, this relates to the specific width of the cultivation bed in the traffic lanes system in question. For example, there are traffic lanes systems having width dimensions of 3 meter, 2.2 meter and 1.5 meter.

A particular embodiment of the plough according to the invention is characterized in that the plough comprises a second set of at least two plough shares at least partially arranged behind one another, including a first and a last plough share, wherein the first set and the second set comprise an equal number of plough shares arranged symmetrically with respect to the longitudinal axis of the plough, and each set comprises a conveying means provided between the first and the last plough share.

The use of this plough which is symmetrically constructed with respect to the longitudinal axis resides in that it does not have the tendency to slip out of alignment. By virtue thereof, continual steering corrections are not necessary, allowing ploughing in a straight line with minimum power requirements and minimal fuel consumption.

A further embodiment of the plough according to the invention is characterized in that the conveying means in the respective set(s) is or are arranged such that the soil cut out by the first plough share is deposited upside down into the furrow cut by the last plough share.

This embodiment of a so-termed two-way plough meets the practical requirement of depositing cut out soil, including that from the first furrow, upside down into the respective last furrow.

A subsequent embodiment of the plough according to the invention is characterized in that the plough comprises a pair of discs provided in front of the first of a set of plough shares, which discs are spaced a distance apart for cutting a strip of soil whose width is equal to the width of the soil to be cut by the first plough share situated behind said pair of discs.

By cutting the soil by means of said discs before the soil is undercut and lifted by the chisel, it is achieved that a strip of soil which is well defined as to dimensions and depth is conveyed by the first plough share via the conveying means to the last plough furrow in an operationally safe and reliable manner.

Further detailed, possible embodiments, which are set forth in the remaining claims, are mentioned together with the associated advantages in the following description.

The plough and the relevant method according to the present invention will now be explained in greater detail with reference to the figures mentioned below, in which corresponding components are indicated by the same reference numerals.
In the figures:
Figure 1 shows a plan view of an embodiment of the plough according to the invention;
Figure 2 shows a side view of the plough shown in figure 1; and
Figure 3 shows an embodiment of the plough according to the invention which is symmetrical with respect to the longitudinal axis.

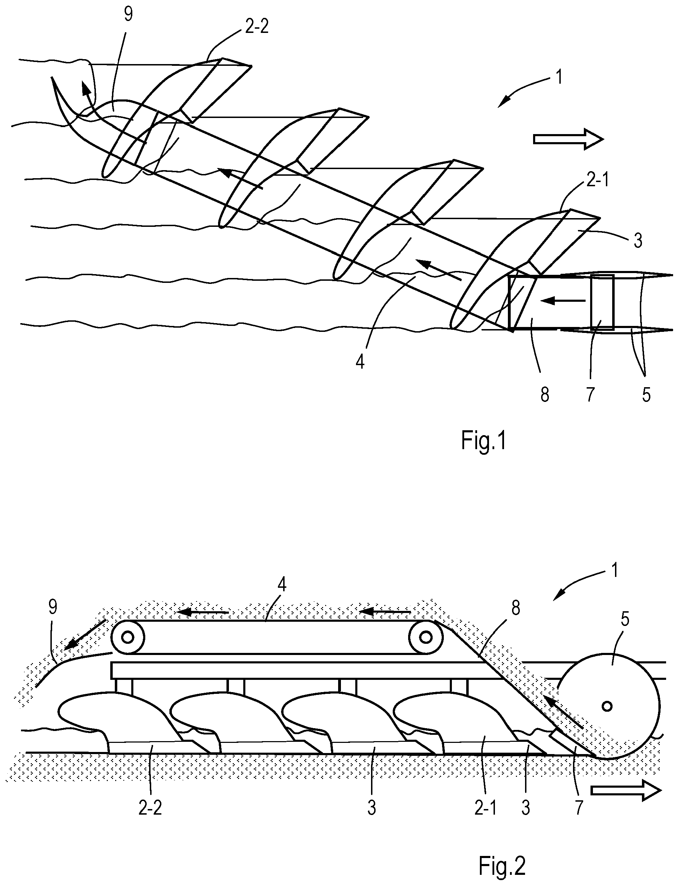

Figure 1 shows a diagrammatic plan view of a plough 1, which, in this case, is comprised of a set comprising four plough shares, which are collectively indicated by means of the reference numeral 2 in this description, which plough shares are arranged partly next to each other and partly behind each other in a customary manner. In figure 1, the direction of movement of the plough 1 is from left to right, and the set may comprise, for example, 2, 3, 4, 5, 6 or more plough shares 2. The most right-hand plough share shown in figure 1 and in the side view of figure 2 is the first plough share 2-1, and the most left-hand one is the last plough share 2-2. The plough shares 2 are each attached to a plough beam, which is not shown in the drawings and which is often moved along by a vehicle, and to which a blade or coulter may be additionally attached if it is required to first make a vertical cut in the soil to be ploughed. Each one of the plough shares 2 cuts the soil from below if necessary by means of a chisel 3. The first plough share 2-1 cuts out the soil which may or may not have been cut loose from below already, after which the soil is transported to a conveying means 4 extending above the plough shares 2, said conveying means being arranged to transport the soil cut out by the first plough share further upwards and to a furrow cut by the last plough share 2-2. The second plough share, which is situated next to the first plough share 2-1, conveys the generally turned over, cut out soil to the furrow cut by the first plough share 2-1. Similarly, the soil cut out by the third plough share is deposited into the empty furrow cut by the second plough share, and the soil cut out by the fourth plough share 2-2, which is the last plough share in this case, is deposited into the furrow cut by the third plough share. And the furrow cut by the fourth and last plough share 2-2, is filled, as explained hereinabove, with soil supplied via the conveying means 4 which originates from the first plough share 2-1. In this way, unfilled furrows behind the plough 1 are prevented, which simplifies the subsequent levelling of a field ploughed in this manner. In addition, the plough 1 does not require an initial furrow. By virtue thereof, the plough 1 is very suitable for use as a traffic lanes plough. This can be attributed to the fact that in a so-termed fixed traffic lanes system, beds, such as cultivation beds, situated between fixed traffic lanes are used over and over again, and over a period of several years, driving takes place only on these previously determined fixed traffic lanes, which consequently do not have be ploughed.

In general, the conveying means 4 will be provided with a trough 8, 9, between which a driven conveyor belt moves from the first plough share 2-1, over the intermediate plough shares 2, to the final plough share 2-2. Turning over the soil cut out by the first plough share 2-1, if necessary, can take place before, during or after the transport of the soil by means of the conveying means 4.

The plough 1 may comprise a pair of discs 5 provided in front of the first plough share 2-1 of a set of plough shares, which discs are spaced a distance apart for cutting a strip of soil whose width is equal to the width of the soil to be cut out by the first plough share 2-1 situated behind said pair of discs. In this case, a knife 7 may be provided between the discs 5 and, if so, the strip of soil cut out with the help of said knife is moved upwards to the conveying means 4.

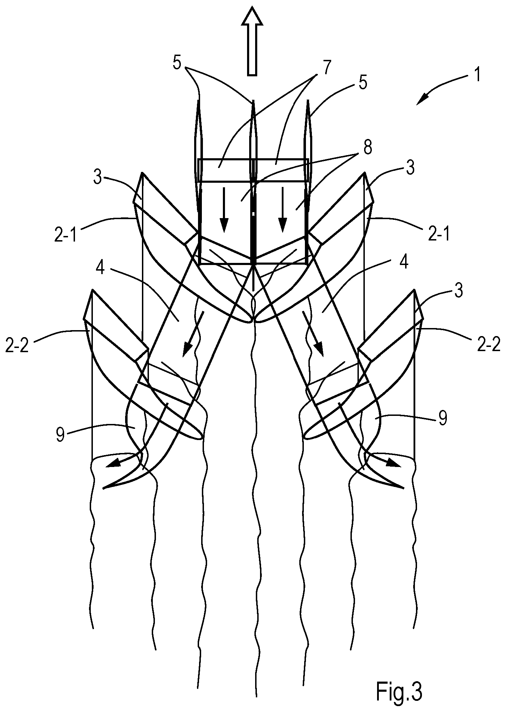

Figure 3 shows an embodiment in which the plough 1 is symmetrically constructed with respect to a longitudinal axis extending vertically therein. One set of plough shares 2 extends to the left of the longitudinal axis and the other set of plough shares extends to the right of said longitudinal axis. Such a mirror symmetrical plough 1 comprising an equal number of plough shares 2 in corresponding positions on the left-hand side and the right-hand side, it is precluded that the plough moves out of alignment because any transverse forces balance each other, thereby making it easier to create straight furrows with the plough 1. In this case, each set comprises a first and a second plough share, and each set comprises its own conveying means 4. In this case, the plough 1 shown in figure 3 comprises discs 5 which first make a cut in the soil when the plough 1 moves upwards as shown in figure 3.

## Claims

1. A plough (1) comprising:
- a set of at least two plough shares (2) at least partially arranged behind one another, including a first plough share (2-1) and a last plough share (2-2), and
- a conveying means (4) extending above the plough shares (2), **characterized in that**
said conveying means (4) is arranged to convey the soil cut out by the first plough share (2-1) upwards and to a furrow cut by the last plough share (2-2).

2. The plough (1) according to claim 1, **characterized in that** the plough comprises a second set of at least two plough shares (2) at least partially arranged behind one another, including a first plough share (2-1) and a last plough share (2-2), wherein the first set and the second set comprise an equal number of plough shares (2) arranged symmetrically with respect to a longitudinal axis of the plough (1), and each set comprises a conveying means (4) provided between the first plough share (2-1) and the last plough share (2-2).

3. The plough (1) according to claim 1 or 2, **characterized in that** the conveying means (4) in the respective sets are arranged such that the soil cut out by the first plough share (2-1) is deposited upside down into the furrow cut by the last plough share (2-2).

4. The plough (1) according to any one of claims 1 to 3, **characterized in that** the conveying means (4) are provided with a drivable conveyor belt.

5. The plough (1) according to any one of claims 1 to 4, **characterized in that** the plough (1) comprises a pair of discs (5) provided in front of the first of a set of plough shares (2), which discs (5) are spaced a distance apart for cutting a strip of soil whose width is equal to the width of the soil to be cut out by the first plough share (2-1) situated behind said pair of discs (5).

6. The plough (1) according to claim 5, **characterized in that** the plough (1) comprises a chisel (7), provided between the discs (5), across which the strip of soil cut out moves upwards to the respective conveying means .

7. The plough (1) according to any one of claims 1 to 6, **characterized in that** at least the at least one set comprises between 2 and, for example, 8 plough shares (2).

8. The plough (1) according to any one of claims 1 to 7, **characterized in that** the plough (1) is a traffic lanes plough.

9. A method wherein, by means of a plough (1) according to any of claims 1-8, wherein by means of a first plough share (2-1), a mass of soil is cut from a furrow which is subsequently filled with soil from a neighbouring plough share, and wherein the soil cut out by the first plough share (2-1) is transported over neighbouring plough shares (2) to a furrow created by a last plough share (2-2) and is deposited therein.

10. The method according to claim 9, **characterized in that** the method is applied on either side of a longitudinal axis of a plough (1) such that a symmetrical mechanical load for the plough (1) is achieved that precludes that the plough (1) moves out of alignment.

## Patentansprüche

1. Pflug (1), welcher Folgendes aufweist:
- einen Satz von wenigstens zwei Pflugscharen (2), die zumindest teilweise hintereinander angeordnet sind, einschließlich einer ersten Pflugschar (2-1) und einer letzten Pflugschar (2-2), und
- eine Fördereinrichtung (4), welche sich über die Pflugscharen (2) erstreckt, **dadurch gekennzeichnet, dass**
die Fördereinrichtung (4) dafür vorgesehen ist, die von der ersten Pflugschar (2-1) geschnittene Erde nach oben und zu einer durch die letzte Pflugschar (2-2) geschnittene Furche zu fördern.

2. Pflug (1) nach Anspruch 1,
**dadurch gekennzeichnet, dass** der Pflug einen zweiten Satz von wenigstens zwei Pflugscharen (2) aufweist, die zumindest teilweise hintereinander angeordnet sind, einschließlich einer ersten Pflugschar (2-1) und einer zweiten Pflugschar (2-2), wobei der erste Satz und der zweite Satz eine gleiche Anzahl an Pflugscharen (2) aufweist, die bezüglich einer Längsachse des Pflugs (1) symmetrisch angeordnet sind, und wobei jeder Satz eine Fördereinrichtung (4) aufweist, die zwischen der ersten Pflugschar (2-1) und der letzten Pflugschar (2-2) angeordnet ist.

3. Pflug (1) nach Anspruch 1 oder 2,
**dadurch gekennzeichnet, dass** die Fördereinrichtungen (4) in den jeweiligen Sätzen derart angeordnet sind, dass die durch die erste Pflugschar (2-1) geschnittene Erde umgekehrt in die durch die letzte Pflugschar (2-2) geschnittene Furche abgelegt wird.

4. Pflug (1) nach einem der Ansprüche 1 bis 3,
**dadurch gekennzeichnet, dass** die Fördereinrichtung (4) mit einem antreibbaren Förderband ausgestattet ist.

5. Pflug (1) nach einem der Ansprüche 1 bis 4,
**dadurch gekennzeichnet, dass** der Pflug (1) ein Paar Scheiben (5) aufweist, die vor dem ersten eines Satzes von Pflugscharen (2) angeordnet sind, wobei die Scheiben derart beabstandet sind, um einen Streifen von Erde zu schneiden, dessen Breite gleich der Breite der durch die erste Pflugschar (2-1), die hinter dem Paar von Scheiben (5) angeordnet ist, auszuschneidende Erde ist.

6. Pflug (1) nach Anspruch 5,
**dadurch gekennzeichnet, dass** der Pflug (1) einen Meißel (7) aufweist, der zwischen den Scheiben (5) vorgesehen ist, über welchen der ausgeschnittene Streifen von Erde sich nach oben zu der jeweiligen Fördereinrichtung bewegt.

7. Pflug (1) nach einem der Ansprüche 1 bis 6,
**dadurch gekennzeichnet, dass** wenigstens der wenigstens eine Satz zwischen 2 und zum Beispiel 8 Pflugscharen (2) aufweist.

8. Pflug (1) nach einem der Ansprüche 1 bis 7,
**dadurch gekennzeichnet, dass** der Pflug (1) ein Fahrbahnpflug ist.

9. Verfahren, bei dem mittels eines Pflugs (1) nach einem der Ansprüche 1 bis 8 mittels einer ersten Pflugschar (2-1) eine Masse an Erde aus einer Furche ausgeschnitten wird, welche nachfolgend mit Erde von einer benachbarten Pflugschar gefüllt wird, und wobei die durch die erste Pflugschar (2-1) ausgeschnittene Erde über benachbarte Pflugscharen (2) zu einer Furche transportiert wird, welche durch eine letzte Pflugschar (2-2) erzeugt wurde, und darin abgelegt wird.

10. Verfahren nach Anspruch 9,
**dadurch gekennzeichnet, dass** das Verfahren auf jeder Seite einer Längsachse eines Pflugs (1) angewendet wird, so dass eine symmetrische mechanische Last für den Pflug (1) erreicht wird, die ausschließt, dass sich der Pflug (1) aus seiner Ausrichtung heraus bewegt.

## Revendications

1. Charrue (1) comprenant :
- un jeu d'au moins deux socs de charrue (2) agencés au moins partiellement les uns derrière les autres, comportant un soc de charrue de tête (2-1) et un soc de charrue de queue (2-2), et
- un moyen de transport (4) s'étendant au-dessus des socs de charrue (2),
**caractérisée en ce que**
ledit moyen de transport (4) est agencé pour transporter la terre déblayée par le soc de charrue de tête (2-1) vers le haut et vers un sillon creusé par le soc de charrue de queue (2-2).

2. Charrue (1) selon la revendication 1, **caractérisée en ce que** la charrue comprend un deuxième jeu d'au moins deux socs de charrue (2) agencés au moins partiellement les uns derrière les autres, comportant un soc de charrue de tête (2-1) et un soc de charrue de queue (2-2), dans laquelle le premier jeu et le deuxième jeu comprennent un nombre égal de socs de charrue (2) agencés symétriquement par rapport à un axe longitudinal de la charrue (1), et chaque jeu comprend un moyen de transport (4) prévu entre le soc de charrue de tête (2-1) et le soc de charrue de queue (2-2).

3. Charrue (1) selon la revendication 1 ou 2, **caractérisée en ce que** les moyens de transport (4) dans les jeux respectifs sont agencés de sorte que la terre déblayée par le soc de charrue de tête (2-1) soit déposée à l'envers dans le sillon creusé par le soc de charrue de queue (2-2).

4. Charrue (1) selon l'une quelconque des revendications 1 à 3, **caractérisée en ce que** les moyens de transport (4) sont pourvus d'une bande transporteuse pouvant être entraînée.

5. Charrue (1) selon l'une quelconque des revendications 1 à 4, la charrue (1) étant **caractérisée en ce qu'**elle comprend une paire de disques (5) prévus devant le soc de tête d'un jeu de socs de charrue (2), lesquels disques (5) sont espacés d'une distance pour creuser une bande de terre dont la largeur est égale à la largeur de la terre devant être déblayée par le soc de charrue de tête (2-1) situé derrière ladite paire de disques (5).

6. Charrue (1) selon la revendication 5, la charrue (1) étant **caractérisée en ce qu'**elle comprend une dent à pointe (7), prévue entre les disques (5), à travers laquelle la bande de terre déblayée se déplace vers le haut vers le moyen de transport respectif.

7. Charrue (1) selon l'une quelconque des revendications 1 à 6, **caractérisée en ce qu'**au moins l'au moins un jeu comprend entre 2 et, par exemple, 8 socs de charrue (2).

8. Charrue (1) selon l'une quelconque des revendications 1 à 7, la charrue (1) étant **caractérisée en ce qu'**elle est une charrue pour couloirs de circulation.

9. Procédé dans lequel, au moyen d'une charrue (1) selon l'une des revendications 1 à 8, où au moyen d'un soc de charrue de tête (2-1), une masse de terre est déblayée d'un sillon qui est ensuite rempli de terre provenant d'un soc de charrue voisin, et dans lequel la terre déblayée par le soc de charrue de tête (2-1) est transportée sur des socs de charrue (2) voisins vers un sillon créé par un soc de charrue de queue (2-2) et y est déposée.

10. Procédé selon la revendication 9, le procédé étant **caractérisé en ce qu'**il est appliqué de chaque côté d'un axe longitudinal d'une charrue (1) de sorte à obtenir une charge mécanique symétrique pour la charrue (1) qui empêche que la charrue (1) ne se déplace hors d'alignement.
